# EUROPEAN PATENT SPECIFICATION

(11) **EP 3 778 092 B1**
(45) Date of publication and mention of the grant of the patent: **29.06.2022**
(21) Application number: 19787971.1
(22) Date of filing: 11.04.2019
(51) Int. Cl.: B23K 11/30, B23C 5/12, B23K 11/11

(54) **MACHINING CUTTER FOR TIP DRESSING**
BEARBEITUNGSFRÄSER FÜR ELEKTRODENKAPPENFRÄSEN
OUTIL DE COUPE D'USINAGE DE DRESSAGE DE POINTE

(30) Priority: 16.04.2018 JP 2018078416
(43) Date of publication of application: 17.02.2021
(73) Proprietor: Kyokutoh Co., Ltd., Oridocho, Nisshin-shi, Aichi 4700115 (JP)
(72) Inventor: TEZAWA, Kazuhiro, Nissin-shi Aichi 470-0115 (JP)
(74) Representative: Winter, Brandl - Partnerschaft mbB
(86) International application number: PCT/JP2019/015739
(87) International publication number: WO 2019/203105

(56) References cited:
- DE-A1-102015 012 743
- DE-A1-102017 102 032
- DE-B3-102010 025 835
- FR-A1- 2 846 897
- US-A1- 2008 078 749
- US-A1- 2017 225 262

## Description

### TECHNICAL FIELD

The present disclosure relates to a tip dressing cutter for use in cutting a distal end of an electrode tip of spot welding.

### BACKGROUND ART

Generally, a tip dressing cutter, for example, disclosed in WO 2017/ 094 041 A1 includes a rotary holder configured to be rotatable about its rotation axis extending vertically. The rotary holder is generally C-shaped in planar view, and includes a cutaway part having a gentle circumferential expansion around the rotation axis as the rotary holder extends radially outwardly away from the rotation axis, the cutaway part then being open outwardly. A pair of fitting surfaces are formed on respective top and bottom faces of the rotary holder to be arranged symmetrically along a direction of the rotation axis. The fitting surfaces are formed to have a gradual decrease in diameter toward a center portion of the rotary holder. The fitting surfaces have a plurality of circular arc grooves formed thereon, and the plurality of circular arc grooves extend around the rotation axis and are consecutively formed in a direction intersecting with the rotation axis. A cutter plate generally T-shaped as viewed from a side is attached on one of inner faces of the cutaway part extending outwardly from the rotation axis. The cutter plate has one plate face facing an attachment portion for attaching to the rotary holder and the other plate face forming a rake face. The rake face extends to intersect with a circumference extent around the rotation axis. A pair of flank faces are formed on respective upper and lower parts of the rake face. The flank faces are generally orthogonal to the rake face. Both of the flank faces have a curved shape such that the flank faces are progressively spaced apart from each other along the direction of the rotation axis as the flank faces extend away from the rotation axis of the rotary holder. Both of the flank faces are thus shaped to correspond to the respective fitting surfaces. A pair of cutting blade portions extending to intersect with the rotation axis are formed on respective continuous portions of the rake face and the flank faces to be arranged symmetrically along the rotation axis. When distal ends of electrode tips are fitted with the respective fitting surfaces of the rotating rotary holder with central axes of the electrode tips being aligned with the rotation axis of the rotary holder, the cutting blade portions contact the respective distal ends of the electrode tips to cut the distal ends of the electrode tips. In that operation, continuous portions of two adjacent grooves formed on the fitting surfaces catch the distal ends of the electrode tips in a direction intersecting with the central axes of the electrode tips, and guides the rotation of the rotary holder against the distal ends of the electrode tips. During the cutting, misalignment of the rotation axis of the rotary holder and the central axes of the electrode tips is thus prevented to stabilize the cutting movement of the cutter plate. Further prior art is disclosed with FR 2 846 897 A1, DE 10 2015 012 743 A1, DE 10 2017 102 032 A1, DE 10 2010 025 835 B3 and US 2008/0078749 A1. The document FR 2 846 897 A1 discloses a tip dressing cutter according to the preamble of claim 1.

### SUMMARY OF INVENTION

### TECHNICAL PROBLEM

The cutter as described in WO 2017/ 094 041 A1 then needs to form a plurality of circular arc grooves on the fitting surfaces of the rotary holder, which causes issues of complicated machining and higher production cost. The cutter as described in WO 2017/ 094 041 A1 also has the cutter plate that is periodically exchanged for the purpose of maintenance of the cutting blade portions. When the shapes of the grooves formed on the rotary holder are changed following repeated cutting operations, the rotary holder also may need an exchange for maintenance and this may affect line takt time.

The present disclosure is made in view of the foregoing and an object of the present disclosure is to provide a less costly tip dressing cutter that enables stabilization of cutting movement and reduction of maintenance frequencies.

### SOLUTION TO PROBLEM

The technical problem is solved by claim 1, the present disclosure of which is among others characterized by forming a plurality of grooves on a cutter plate rather than on a rotary holder to achieve the object.

Specifically, the present disclosure is directed to a tip dressing cutter including a rotary holder configured to be rotatable about its rotation axis and a cutter plate attached to the rotary holder, the cutter plate configured to contact a distal end of a spot welding electrode tip brought into proximity to the rotating rotary holder with a central axis of the electrode tip being aligned with the rotation axis, and to cut the distal end. The following solutions are then applied.

According to a first aspect of the present disclosure, the cutter plate includes a rake face extending to intersect with a circumferential extent around the rotation axis; a flank face configured to face the distal end of the electrode tip when the electrode tip is brought into proximity to the rotary holder; and a cutting blade portion formed on a continuous portion of the rake face and the flank face and extending along a direction intersecting with the rotation axis, the cutting blade portion configured to cut the distal end of the electrode tip brought into proximity to the rotary holder, wherein a plurality of recessed grooves are formed on the flank face, the plurality of recessed grooves extending from a location proximate to the cutting blade portion in a circumferential direction around the rotation axis away from the cutting blade portion and being spaced at predetermined intervals along a direction intersecting with the rotation axis.

According to a second aspect of the present disclosure, the recessed grooves are each sloped to have a depth presenting a gentle increase as the recessed grooves extend away from the cutting blade portion.

### ADVANTAGEOUS EFFECTS OF INVENTION

In the first aspect of the present disclosure, when a distal end of an electrode tip is fitted with a fitting surface with the rotary holder being rotated, a region of the distal end of the electrode tip immediately after cutting by the cutting blade portion of the cutter plate comes into contact with peripheral edges of opening portions of the recessed grooves. The peripheral edges of the opening portion of the recessed grooves then catch the distal end of the electrode tip in a direction intersecting with the central axis, and guide the rotation on the distal ends of the electrode tips. During the cutting operation, misalignment of the rotation axis of the rotary holder and the central axis of the electrode tip thus can be prevented to stabilize the cutting operation. The recessed grooves are then formed on the flank face of the cutter plate which has a smaller area than the fitting surface of the rotary holder, enabling simpler machining and lower production cost as compared with WO 2017/ 094 041 A1. Further, the recessed grooves are provided on the cutter plate having the cutting blade portion, so that after repeated cutting operations, the cutter plate is removed from the rotary holder for maintenance and thereby, the maintenance for the cutting blade portion and the recessed grooves can be simultaneously performed. Thus, less labor for maintenance is required as compared with a cutter having the structure as described in WO 2017/ 094 041 A1.

In the second aspect of the present disclosure, the recessed grooves are be formed on the flank face without reduced thickness around the cutting blade portion of the cutter plate. In the cutting operation, prevention of misalignment of the electrode tip with the rotary holder thus can be ensured, and higher rigidity around the cutting blade portion also can be achieved to ensure prevention of chipping on the cutting blade portion.

### BRIEF DESCRIPTION OF DRAWINGS

Figure 1 is a perspective view of a tip dresser according to an embodiment of the present disclosure.
Figure 2 is a cross-sectional view taken along a plane II-II indicated in Figure 1.
Figure 3 is a perspective view of a rotary holder to which a cutter according to an embodiment of the present disclosure is attached.
Figure 4 is a perspective view of a cutter according to an embodiment of the present disclosure.
Figure 5 is an enlarged view of a part V indicated in Figure 2.

### DESCRIPTION OF EMBODIMENTS

Embodiments of the present disclosure are described in detail below with reference to the drawings. It is noted that following description of the preferred embodiments is merely an example in nature.

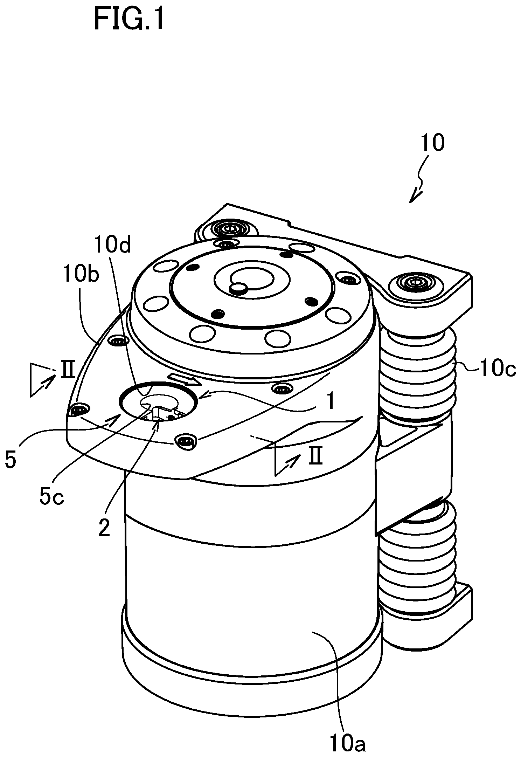

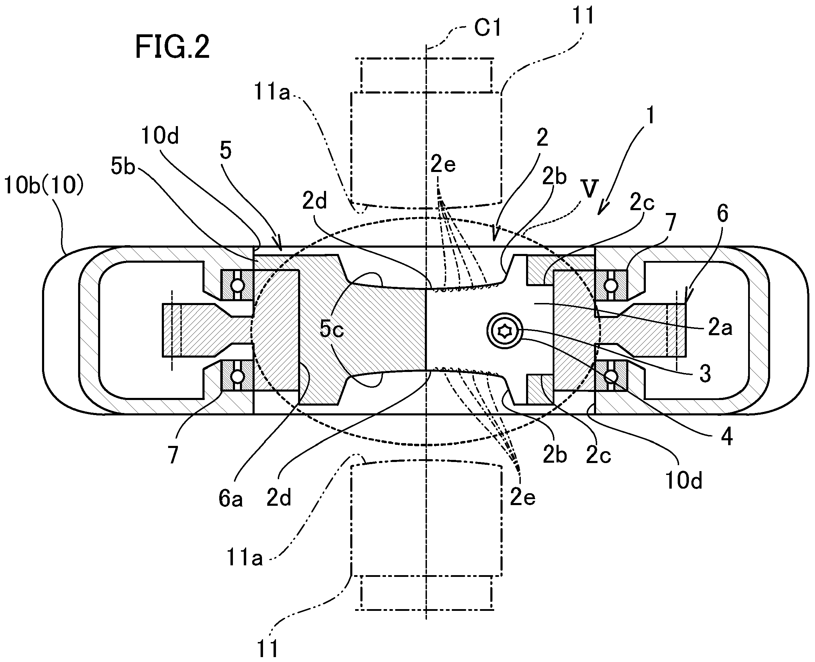

Figure 1 illustrates a tip dresser 10 according to an embodiment of the present disclosure. The tip dresser 10 is used for cutting distal ends 11a of a pair of electrode tips 11 (see Figure 2) fitted onto respective shanks of a welding gun (not shown) to be opposite one another. The tip dresser 10 includes a cylindrical motor housing 10a having a cylinder center line oriented vertically, a plate-shaped housing 10b extending horizontally from an upper end of the motor housing 10a, and a shock absorbing mechanism 10c attached to a side of the motor housing 10a and configured to absorb impact applied vertically on the motor housing 10a and the plate-shaped housing 10b. A drive motor (not shown) having a rotation axis extending upward is housed inside the motor housing 10a.

As illustrated in Figure 2, a pair of circular through holes 10d facing each other are formed in respective top and bottom surfaces of the plate-shaped housing 10b on an extension end side of the plate-shaped housing 10b.

In an interior of the plate-shaped housing 10b and between the through holes 10d, a ring-shaped output gear 6 is mounted rotatably about a vertically extending rotation axis C1 via a pair of upper and lower bearings 7. The output gear 6 is configured to be rotated about the rotation axis C1 by the drive motor and a gear meshing mechanism that are not shown.

The output gear 6 has at a center thereof a mounting hole 6a extending therethrough vertically. A cutter 1 is then mounted in the mounting hole 6a.

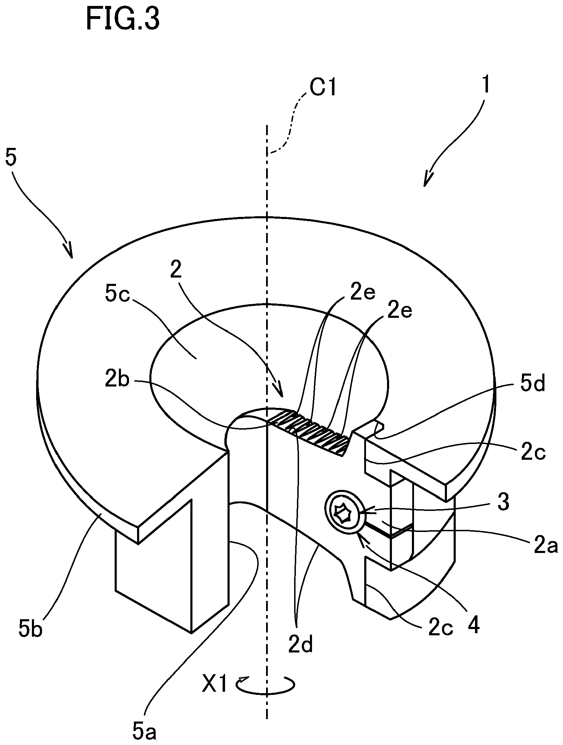

The cutter 1 has a rotary holder 5 generally C-shaped in planar view and configured to be rotatable about the rotation axis C1 extending vertically. The rotary holder 5, as illustrated in Figure 3, includes a cutaway part 5a having a gentle circumferential expansion around the rotation axis C1 as the rotary holder 5 extends radially outwardly from the rotation axis C1, and the cutaway part 5a then being open outwardly.

A flange 5b extending outwardly beyond other portions of the rotary holder 5 is formed on an upper peripheral edge of the rotary holder 5.

Then, as illustrated in Figures 2 and 3, a pair of fitting surfaces 5c are formed on respective top and bottom surfaces of the rotary holder 5 to be arranged symmetrically along a direction of the rotation axis C1, and the fitting surfaces 5c are formed to have a gradual decrease in diameter toward a center portion of the rotary holder 5.

The fitting surfaces 5c have a shape corresponding to a curved shape of a distal end 11a of an electrode tip 11 and fitted with a distal end 11a of an electrode tip 11 with a central axis of the electrode tip 11 being aligned with the rotation axis C1.

An attachment step portion 5d is formed on one of inner faces of the cutaway part 5a extending outwardly from the rotation axis C1. The attachment step portion 5d is generally T-shaped in side view and recessed to form a step.

A metal cutter plate 2 for cutting a distal end 11a of an electrode tip 11 is attached to the attachment step portion 5d.

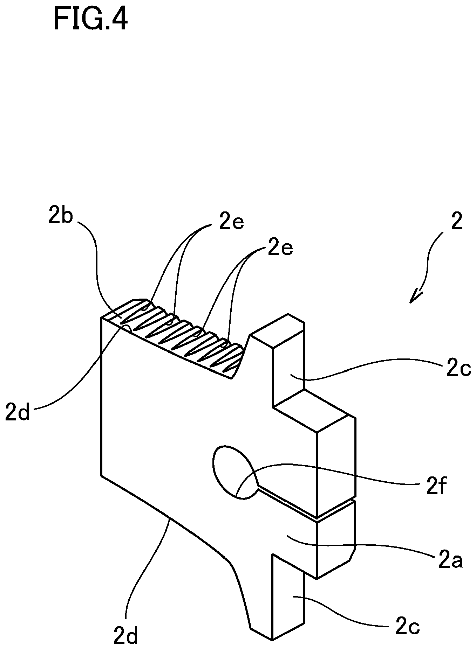

As illustrated in Figures 3 and 4, the cutter plate 2 is formed by cutting a metal plate into a general T-shape. The cutter plate 2 is secured to the attachment step portion 5d by means of a screw 3 and a washer 4 through an attachment hole 2f formed at a substantial center portion thereof.

The cutter plate 2 has one plate face facing a bottom surface of the attachment step portion 5d in the state where the cutter plate 2 is attached to the attachment step portion 5d, and the other plate face forming a rake face 2a. The rake face 2a extends to intersect with a circumference extent around the rotation axis C1.

A pair of flank faces 2b are formed on respective upper and lower parts of the rake face 2a. The flank faces 2b are generally orthogonal to the rake face 2a.

Thus, the pair of flank faces 2b are formed to be spaced at a predetermined interval along the direction of the rotation axis C1. Both of the flank faces 2b have a curved shape such that the flank faces 2b are progressively spaced apart from each other along the direction of rotation axis C1 as the flank faces 2b extend away from the rotation axis C1.

Both of the flank faces 2b then have a shape corresponding to the respective fitting surfaces 5c in the state where the cutter plate 2 is attached to the rotary holder 5. When electrode tips 11 are brought into proximity to the flank faces 2b with the central axes of the electrode tips 11 being aligned with the rotation axis C1, the flank faces 2b face respective distal ends 11a of the electrode tips 11.

A pair of positioning recesses 2c cut away rectangularly in side view are formed in respective top and bottom portions of the cutter plate 2 on a side of the cutter plate 2 away from the rotation axis C1.

A pair of cutting blade portions 2d extending to have a gentle curve in a direction intersecting with the rotation axis C1 are formed on respective continuous portions of the rake face 2a and the flank faces 2b to be arranged symmetrically along the direction of the rotation axis C1.

A plurality of recessed grooves 2e are formed on the flank faces 2b. The plurality of recessed grooves 2e each extend from a location proximate to the cutting blade portion 2d in a circumferential direction around the rotation axis C1 away from the cutting blade portion 2d and are spaced at equal intervals along the direction intersecting with the rotation axis C1.

The recessed grooves 2e are each generally V-shaped in cross-sectional view and sloped to have an increasing depth as the recessed grooves 2e extend away from the cutting blade portion 2d.

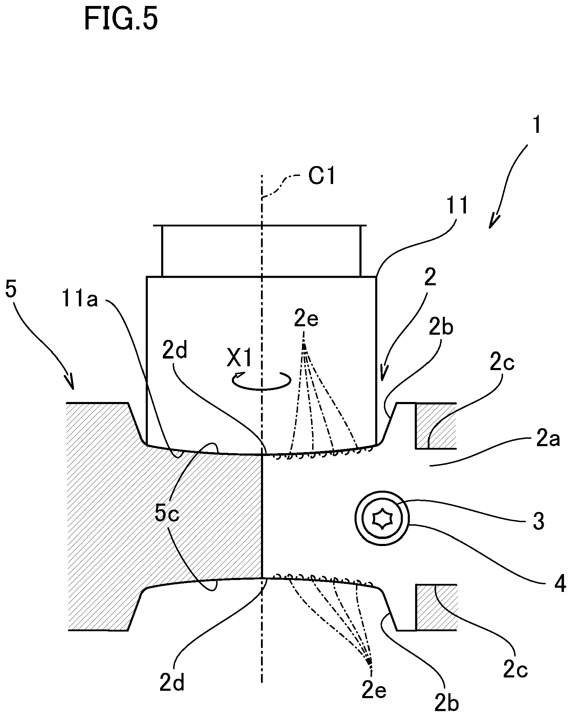

When electrode tips 11 are then brought into contact with the cutter 1 rotated in a XI direction with the central axes of the electrode tips 11 being aligned with the rotation axis C1, the cutting blade portions 2d of the cutter plate 2 contact respective distal ends 11a of the electrode tips 11 to cut the distal ends 11a and then peripheral edges of opening portions of the recessed grooves 2e come into contact with the distal ends 11a, as illustrated in Figure 5.

Next, a cutting operation for distal ends 11a of electrode tips 11 by using the tip dresser 10 is described.

First, as illustrated in Figure 2, a pair of electrode tips 11 having distal ends 11a in a deteriorated condition are moved above and below the plate-shaped housing 10b of the tip dresser 10, respectively, and the central axes of the electrode tips 11 are brought into alignment with the rotation axis C1.

The drive motor and the gear meshing mechanism of the tip dresser 10 that are not shown are then driven in rotation to turn the cutter 1 on the rotation axis C1.

Thereafter, the electrode tips 11 are brought into proximity along the rotation axis C1 to the respective fitting surfaces 5c of the rotary holder 5 and the distal ends 11a of the electrode tips 11 are then fitted into the respective fitting surfaces 5c. As illustrated in Figure 5, the cutting blade portions 2d of the cutter plate 2 thus contact the respective distal ends 11a of the electrode tips 11 to start to cut the distal ends 11a. In the operation, regions of the distal ends 11a of the electrode tips 11 immediately after cutting by the cutting blade portions 2d of the cutter plate 2 come into contact with the peripheral edges of the opening portions of the recessed grooves 2e that are formed on the flank faces 2b. The peripheral edges of the opening portion of the recessed grooves 2e then catch the distal ends 1 1a of the electrode tips 11 in a direction intersecting with the central axes, and guide the rotation on the distal ends 11a of the electrode tips 11. During the cutting operation, misalignment of the rotation axis C1 of the rotary holder 5 and the central axes of the electrode tips 11 thus can be prevented to stabilize the cutting operation.

The recessed grooves 2e are then formed on the flank faces 2b of the cutter plate 2 which has a smaller area than the fitting surface 5c of the rotary holder 5, enabling simpler machining and lower production cost as compared with WO 2017/ 094 041 A1.

Moreover, the recessed grooves 2e are formed on the cutter plate 2 having the cutting blade portions 2d, so that after repeated cutting operations, the cutter plate 2 is removed from the rotary holder 5 for maintenance and thereby, the maintenance for the cutting blade portions 2d and the recessed grooves 2e can be simultaneously performed. Thus, less labor for maintenance is required as compared with a cutter 1 having the structure as described in WO 2017/ 094 041 A1.

In addition, the recessed grooves 2e formed on the flank faces 2b are sloped to have a depth presenting a gentle increase as the recessed grooves 2e extend away from the respective cutting blade portions 2d, so that the recessed grooves 2e are be formed on the flank faces 2b without reduced thickness around the cutting blade portions 2d of the cutter plate 2. In the cutting operation, prevention of misalignment of the electrode tips 11 with the rotary holder 5 thus can be ensured, and higher rigidity around the cutting blade portions 2d also can be achieved to ensure prevention of chipping on the cutting blade portions 2d.

In this respect, when the cutting operation is performed by using the cutter 1 according to the present disclosure, concentric annular grooves are formed on distal ends 11a of electrode tips 11 by the peripheral edges of the opening portions of the recessed grooves 2e and a surface having protrusions and depressions are then formed on the distal ends 11a of the electrode tips 11. The depth of the annular grooves is small and thus this does not affect the welding.

In the embodiments of the present disclosure, the pair of cutting blade portions 2d are formed on the cutter plate 2; however, the embodiments are not limited to this configuration and either one of the cutting blade portions 2d may be only provided.

In the embodiments of the present disclosure, the recessed grooves 2e each have a generally V-shaped cross section; however, the embodiments are not limited to this configuration and the recessed grooves 2e each may have a curved shape.

### INDUSTRIAL APPLICABILITY

The present disclosure is suitable for a tip dressing cutter for use in cutting a distal end of an electrode tip of spot welding.

### DESCRIPTION OF REFERENCE CHARACTERS

- 1: Cutter
- 2: Cutter plate
- 2a: Rake face
- 2b: Flank face
- 2d: Cutting blade portion
- 2e: Recessed groove
- 5: Rotary holder
- 10: Tip dresser
- 11: Electrode tip
- 11a: Distal end
- C1: Rotation axis

## Claims

1. A tip dressing cutter (1) comprising a rotary holder (5) configured to be rotatable about its rotation axis (C1) and a cutter plate (2) attached to the rotary holder (5), the cutter plate (2) configured to contact a distal end (11a) of a spot welding electrode tip (11) brought into proximity to the rotating rotary holder (5) with a central axis of the electrode tip (11) being aligned with the rotation axis (C1) and to cut the electrode tip (11) distal end (11a), the cutter plate (2) comprising a rake face (2a) shaped to extend along a direction intersecting with a circumferential direction about the rotation axis (C1); a flank face (2b) configured to contact the distal end (11a) of the electrode tip (11) when the electrode tip (11) is brought into proximity to the rotary holder (5); and a cutting blade portion (2d) formed on a continuous portion of the rake face (2a) and the flank face (2b) and extending along a direction intersecting with the rotation axis (C1), while being curved, the cutting blade portion (2d) configured to cut the distal end (11a) of the electrode tip (11) brought into proximity to the rotary holder (5), wherein a plurality of recessed grooves (2e) are formed on the flank face (2b), **characterized in that**
the plurality of recessed grooves (2e) shaped to extend from a location proximate to the cutting blade portion (2d) along the circumferential direction about the rotation axis (C1) away from the cutting blade portion (2d), configured to contact the distal end (11a) of the electrode tip (11) by peripheral edges of opening portions of the recessed grooves (2e) in a state where the electrode tip (11) is brought into proximity to the rotary holder (5), and being spaced at predetermined intervals along a direction intersecting with the rotation axis (C1),
the recessed grooves (2e) are each sloped to have a depth presenting a gentle increase as the recessed grooves (2e) extend away from the cutting blade portion (2d).

## Patentansprüche

1. Spitzenabrichtfräser (1) mit einem Drehhalter (5), der so konfiguriert ist, dass er um seine Drehachse (C1) drehbar ist, und einer Schneidplatte (2), die an dem Drehhalter (5) angebracht ist, wobei die Schneidplatte (2) so ausgebildet ist, dass sie ein distales Ende (11a) einer zum Punktschweißen vorbereiteten Elektrodenspitze (11) berührt, die in die Nähe des rotierenden Drehhalters (5) gebracht wird, wobei eine Mittelachse der Elektrodenspitze (11) mit der Drehachse (C1) in Linie ausgerichtet ist, und das distale Ende (11a) der Elektrodenspitze (11) schneidet,
wobei die Schneidplatte (2) eine Spanfläche (2a) aufweist, die so geformt ist, dass sie sich entlang einer Richtung erstreckt, die eine Umfangsrichtung um die Drehachse (C1) schneidet; eine Flankenfläche (2b) so ausgebildet ist, dass sie das distale Ende (11a) der Elektrodenspitze (11) berührt, wenn die Elektrodenspitze (11) in die Nähe des Drehhalters (5) gebracht wird; und ein Schneidplattenabschnitt (2d) an einem kontinuierlichen Abschnitt der Spanfläche (2a) und der Flankenfläche (2b) ausgeformt ist und sich entlang einer Richtung erstreckt, die die Drehachse (C1) schneidet, während er gekrümmt ist, wobei der Schneidplattenabschnitt (2d) ausgebildet ist, um das in die Nähe des Drehhalters (5) gebrachte distale Ende (11a) der Elektrodenspitze (11) zu schneiden,
wobei mehrere vertiefte Rillen (2e) an der Flankenfläche (2b) ausgeformt sind, **dadurch gekennzeichnet, dass** die mehreren vertieften Rillen (2e) so geformt sind, dass sie sich von einer Stelle in der Nähe des Schneidplattenabschnitts (2d) entlang der Umfangsrichtung um die Drehachse (C1) weg von dem Schneidplattenabschnitt (2d) erstrecken, so ausgebildet sind, dass sie das distale Ende (11a) der Elektrodenspitze (11) durch Umfangskanten von Öffnungsabschnitten der vertieften Rillen (2e) in einem Zustand berühren, in dem die Elektrodenspitze (11) in die Nähe des Drehhalters (5) gebracht ist, und in vorbestimmten Intervallen entlang einer Richtung, die sich mit der Drehachse (C1) schneidet, beabstandet sind, wobei die vertieften Rillen (2e) jeweils geneigt sind, um eine Tiefe aufzuweisen, die flach ansteigt, wenn sich die vertieften Rillen (2e) von dem Schneidplattenabschnitt (2d) weg erstrecken.

## Revendications

1. Outil de coupe à dressage de pointe (1) comprenant un support rotatif (5) configuré pour pouvoir tourner autour de son axe de rotation (C1) et une plaque de coupe (2) fixée au support rotatif (5), la plaque de coupe (2) étant configurée pour entrer en contact une extrémité distale (11a) d'une pointe d'électrode de soudage par points (11) amenée à proximité du support rotatif (5) en rotation, un axe central de la pointe d'électrode (11) étant aligné sur l'axe de rotation (C1), et pour couper l'extrémité distale (11a) de la pointe d'électrode (11 ), la plaque de coupe (2) comprenant une face d'attaque (2a) façonnée pour s'étendre le long d'une direction croisant une direction circonférentielle autour de l'axe de rotation (C1) ; une face de dépouille (2b) configurée pour entrer en contact avec l'extrémité distale (11a) de la pointe d'électrode (11) lorsque la pointe d'électrode (11) est amenée à proximité du support rotatif (5) ; et une partie lame coupante (2d) formée sur une partie continue de la face d'attaque (2a) et de la face de dépouille (2b) et s'étendant le long d'une direction croisant l'axe de rotation (C1), tout en s'incurvant, la partie lame coupante (2d) étant configurée pour couper l'extrémité distale (11a) de la pointe d'électrode (11) amenée à proximité du support rotatif (5),
dans lequel une pluralité de rainures évidées (2e) sont formées sur la face de dépouille (2b), **caractérisé en ce que**
la pluralité de rainures évidées (2e) sont façonnées pour s'étendre depuis un emplacement à proximité de la partie lame coupante (2d) le long de la direction circonférentielle autour de l'axe de rotation (C1) loin de la partie lame coupante (2d), sont configurées pour entrer en contact avec l'extrémité distale (11a) de la pointe d'électrode (11) par des bords périphériques de parties d'ouverture des rainures évidées (2e) dans un état où la pointe d'électrode (11) est amenée à proximité du support rotatif (5), et sont espacées à intervalles prédéterminés le long d'une direction croisant l'axe de rotation (C1),
les rainures évidées (2e) sont chacune inclinées pour présenter une profondeur présentant une légère augmentation à mesure que les rainures évidées (2e) s'étendent loin de la partie lame coupante (2d).
